# EUROPÄISCHE PATENTSCHRIFT

(11) **EP 2 382 261 B1**
(45) Veröffentlichungstag und Bekanntmachung des Hinweises auf die Patenterteilung: **16.09.2015**
(21) Anmeldenummer: 09768067.2
(22) Anmeldetag: 10.12.2009
(51) Int. Cl.: C08J 7/04, C08J 7/16, C08J 9/34

(54) **HAFTVERMITTLER FÜR HAFTVERBUNDE AUS KUNSTSTOFF UND EINEM POLYISOCYANAT-POLYADDITIONSPRODUKT**
ADHESION PROMOTER FOR ADHESIVE COMPOSITES COMPOSED OF PLASTIC AND OF A POLYISOCYANATE POLYADDITION PRODUCT
PROMOTEUR D'ADHÉRENCE POUR COMPOSITE ADHÉSIF EN MATIÈRE PLASTIQUE ET EN UN PRODUIT DE POLYADDITION DE POLYISOCYANATE

(30) Priorität: 23.12.2008 EP 08172710
(43) Veröffentlichungstag der Anmeldung: 02.11.2011
(60) Teilanmeldung: 14166682.6
(73) Patentinhaber: BASF SE, 67056 Ludwigshafen (DE)
(72) Erfinder: RENNER, Christian, 49448 Lemförde (DE); TISCHER, Gerlinde, 01945 Ruhland (DE); ILLGUTH, Rolf, 49356 Diepholz (DE); GEHRING, Margit, 49448 Lemförde (DE); REDL, Franz Xaver, 49448 Lemförde (DE)
(86) Internationale Anmeldenummer: PCT/EP2009/066783
(87) Internationale Veröffentlichungsnummer: WO 2010/072572

(56) Entgegenhaltungen:
- WO-A1-2005/090440
- DE-A1- 10 022 276
- DE-A1- 10 022 280

## Beschreibung

Die vorliegende Erfindung betrifft Verbundelemente, enthaltend (i) Kunststoff, an den sich haftend (ii) ein Polyisocyanat-Polyadditionsprodukt anschließt, wobei das Polyisocyanat-Polyadditionsprodukt erhalten wird durch Vermischen von (a) Isocyanat mit (b) Verbindungen mit gegenüber Isocyanaten reaktiven Gruppen, (c) Katalysatoren, (d) gegebenenfalls Treibmittel und (e) gegebenenfalls weiteren Additiven zu einer Reaktionsmischung und ausreagieren lassen der Reaktionsmischung zum Polyisocyanat-Polyadditionsprodukt, wobei die Verbindungen mit gegenüber Isocyanaten reaktiven Gruppen (b) einen Polyesterpolyalkohol als Haftvermittler enthält, herstellbar durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17 mol-% Phthalsäure, Isophthalsäure und/oder Terephthalsäure aufweist. Ebenfalls betrifft die vorliegende Erfindung ein Verfahren zur Herstellung solcher Verbundelemente, und Bauteile im Flugzeug-, Fahrzeug- oder Immobilienausbau sowie Kabelummantelungen und andere elektronische Bauteile, z.B. im Fahrzeugbau oder in Haushaltsgeräten, enthaltend ein solches Verbundelement.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Polyisocyanat-Polyadditionsprodukte, die erhalten werden, indem man (a) Isocyanat mit (b) Verbindungen mit gegenüber Isocyanaten reaktiven Gruppen, (c) Katalysatoren, (d) gegebenenfalls Treibmittel und (e) gegebenenfalls weiteren Additiven zu einer Reaktionsmischung vermischt und die Reaktionsmischung zum Polyisocyanat-Polyadditionsprodukt ausreagieren lässt sowie Verbundelemente dieser Polyisocyanat-Polyadditionsprodukte mit Kunststoff sind allgemein bekannt. Eine mechanische Belastung dieser Verbundelemente gegebenenfalls nach Einwirkung von hoher Temperatur und Luftfeuchtigkeit führt häufig zu einer unerwünschten Ablösung der Kunststoffe von den Polyisocyanat-Polyadditionsprodukten. Insbesondere beim Einsatz solcher Verbundelemente im Automobilbau für die eine solche Belastung nicht ausgeschlossen werden kann, ist eine Ablösung der Polyisocyanat-Polyadditionsprodukten von den weiteren Kunststoffen und damit eine Zerstörung des Verbundelementes nicht akzeptabel.

Bei der Ummantelung von elektrischen Leitern werden die isolierten Leiter von einem zweiten Kunststoff, z.B. Polyurethan, ummantelt. Dieser zweite Kunststoff muss dabei auf der Isolierung haften, so dass eine Wasserdichtigkeit längs zur Anordnung der elektrischen Leiter gewährleistet ist. Ist diese Wasserdichtigkeit nicht gegeben, kann eine Trockenraum-Naßraumtrennung insbesondere im Automobilbau nicht gewährleistet werden. Handelt es sich um eine elektrische Leitung, die zu Steuermodulboxen oder Sicherungskästen führt oder um Relais- und Steckerverguß, besteht außerdem die Gefahr von elektrischen Kurzschlüssen. Ferner bietet eine Ummantelung einen mechanischen Schutz vor Beschädigung und Entpolung der einzelnen Kontaktteile.

Zur Verbesserung der Haftung zwischen Polyisocyanat-Polyadditionsprodukt und Kunststoff werden der Reaktionsmischung Haftvermittler auf Basis von Polyesterpolyalkoholen zugegeben. Üblicherweise werden zur Herstellung der Verbundelemente die Komponenten (b) bis (e) als Polyolkomponente vorgemischt. Die eigentliche Herstellung der Polyisocyanat-Polyadditionsprodukte erfolgt dann durch Vermischen der Polyolkomponente mit einer Isocyanatkomponente, die Isocyanate (a) enthält. Dieses Vorgehen vereinfacht die Produktion der Polyisocyanat-Polyadditionsprodukt, da nur noch 2 Komponenten gehandhabt werden müssen. Solche Verbundelemente sind beispielsweise in EP 1361239 beschrieben.

Nachteilig an der in EP 1361239 beschriebenen Polyolkomponente ist, dass diese bei Raumtemperatur ein metastabiles System bildet. Kühlt man diese Polyolkomponente auf unter ca. 14 bis 18 °C ab, bildet sich ein Niederschlag und auch beim Wiederaufheizen der Polyolkomponente auf 25 °C wird diese nicht mehr homogen. Setzt man aber inhomogene Polyolmischungen zur Herstellung des Polyisocyanat-Polyadditionsprodukt ein, werden minderwertige Produkte erhalten, die teilweise überhaupt keine Haftung zu dem Verbundkunststoff mehr aufweisen.

DE 100 22 276 und DE 100 22 280 offenbaren Verbundelemente, wobei der Haftvermittler zusammen mit Isocyanat zu einem Hydroxylgruppen bzw. Isocyanatgruppen aufweisendem Prepolymer umgesetzt wird, welches dann der Polyolkomponente bzw. der Isocyanatkomponente zugegeben wird. Nachteilig hierbei ist, dass ein weiterer Arbeitsschritt nötig ist, um die Polyolkomponente bzw. die Isocyanatkomponente herzustellen. Außerdem findet auch bei Hydroxylgruppen aufweisenden Prepolymeren und bei Isocyanat aufweisenden Prepolymeren Kristallisation statt, wodurch die Komponenten- und Systemstabilität und -homogenität nicht mehr sichergestellt ist.

Aufgabe der vorliegenden Erfindung war es daher ein Verbundelement aus Polyisocyanat Polyadditionsprodukten und Kunststoff zu liefern, das einfach hergestellt werden kann und eine gute Haftung zwischen den Polyisocyanat Polyadditionsprodukten und Kunststoff aufweist. Insbesondere war es Aufgabe der Erfindung, Verbundelemente zu liefern, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei einer Lagerung für 80 Stunden bei 80 °C und 80% rel. Luftfeuchtigkeit nicht verlorengeht.

Weiter war es Aufgabe der Erfindung Verbundmaterialien im Bereich der Isolation von elektrischen Leitern zu liefern, die ausreichend Haftung zur Isolierung der Leiter vor und nach dreimaliger Lagerung bei 120 °C und 100 % relativer Feuchte für jeweils 5 Stunden aufweisen und auch nach dieser Wärmealterung parallel zur Laufrichtung der elektrischen Leiter wasserdicht sind.

Insbesondere sollten die Verbundelemente im Rahmen der vorliegenden Erfindung mit Ausgangskomponenten herstellbar sein, die stabile Mischungen ergeben und somit einfach und reproduzierbar eingesetzt werden können. Dabei sollten sich insbesondere gegenüber Isocyanaten reaktive Verbindungen in der Polyolkomponente auch bei Temperaturen von kleiner 15 °C nicht ausflocken. Weiter war es Aufgabe der Erfindung ein Verfahren zur Herstellung solcher Verbundelemente zu liefern, das einfach durchgeführt werden kann.

Die erfindungsgemäße Aufgabe wird gelöst durch Verbundelemente, enthaltend (i) Kunststoff, an den sich haftend (ii) ein Polyisocyanat-Polyadditionsprodukt anschließt, wobei das Polyisocyanat-Polyadditionsprodukt erhalten wird durch Vermischen von (a) Isocyanat mit (b) Verbindungen mit gegenüber Isocyanaten reaktiven Gruppen, (c) Katalysatoren, (d) gegebenenfalls Treibmittel und (e) gegebenenfalls weiteren Additiven zu einer Reaktionsmischung und ausreagieren lassen der Reaktionsmischung zum Polyisocyanat-Polyadditionsprodukt, wobei die Verbindungen mit gegenüber Isocyanaten reaktiven Gruppen (b) einen Polyesterpolyalkohol als Haftvermittler enthält, herstellbar durch Polykondensation von einer Säurekomponente und einem oder mehreren niedermolekularen Diolen mit einem Molekulargewicht von weniger als 500 g/mol, wobei die Säurekomponente 83 bis 97 mol-% Adipinsäure und 3 bis 17 mol-% Phthalsäure, Isophthalsäure und/oder Terephthalsäure aufweist.

Weiter wird die erfindungsgemäße Aufgabe gelöst durch ein Verfahren zur Herstellung von Verbundelementen, enthaltend (i) Kunststoff, an den sich haftend (ii) ein Polyisocyanat-Polyadditionsprodukt anschließt, wobei man (a) Isocyanat mit (b) Verbindungen mit gegenüber Isocyanaten reaktiven Gruppen, (c) Katalysatoren, (d) gegebenenfalls Treibmittel und (e) gegebenenfalls weiteren Additiven zu einer Reaktionsmischung vermischt und die Reaktionsmischung zum Polyisocyanat-Polyadditionsprodukt ausreagieren lässt, wobei die Verbindungen mit gegenüber Isocyanaten reaktiven Gruppen (b) einen Polyesterpolyalkohol als Haftvermittler enthalten, herstellbar durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17 mol-% Phthalsäure, Isophthalsäure und/oder Terephthalsäure aufweist. Polyisocyanat-Polyadditionsprodukte (ii) im Sinn der Erfindung umfassen insbesondere kompakte Polyisocyanat-Polyadditionsprodukte, wie Duromere oder thermoplastische Polyurethane, und Schaumstoffe auf Basis von Polyisocyanat-Polyadditionsprodukten, wie Weichschaumstoffe, Halbhartschaumstoffe, oder Integralschaumstoffe. Weiter sind unter Polyisocyanat-Polyadditionsprodukten im Sinn der Erfindung Polymerblends, enthaltend Polyurethane und weitere Polymere, sowie Schaumstoffe aus diesen Polymerblends zu verstehen. Die Begriffe "Polyisocyanat-Polyadditionsprodukt" und "Polyurethan" werden im Rahmen der vorliegenden Erfindung als Synonyme benutzt.

Im Rahmen der Erfindung soll unter einem kompakten Polyurethan ein im Wesentlichen von Gaseinschlüssen freier Festkörper verstanden werden. Weitere Details zu erfindungsgemäßen kompakten Polyisocyanat-Polyadditionsprodukten finden sich im "Kunststoffhandbuch, Band 7, Polyurethane", Carl Hanser Verlag, 3. Auflage 1993, Kapitel 8. Unter thermoplastischen Polyurethanen werden kompakte Polyurethane verstanden, die thermoplastische Eigenschaften zeigen. Dabei versteht man unter thermoplastischen Eigenschaften, dass das thermoplastische Polyurethan bei Erwärmen wiederholt aufschmelzbar ist und dabei plastisches Fließen zeigt. Weitere Details zu erfindungsgemäßen thermoplastischen Polyurethanen finden sich im "Kunststoffhandbuch, Band 7, Polyurethane", Carl Hanser Verlag, 3. Auflage 1993, Kapitel 8.2.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Die erfindungsgemäßen Verbundelemente können als Kunststoff (i) beispielsweise duromeren oder thermoplastischen Kunststoff enthalten. Vorzugsweise wird thermoplastischer Kunststoff eingesetzt. Übliche thermoplastische Kunststoffe enthalten, beispielsweise Polyphenylenoxid (PPO), Polyvinylchlorid (PVC), Acrylnitril-Butadien-Styrol (ABS), Polymethylmethacrylat (PMMA), Acrylnitril-Styrol-Acrylester (ASA), Polycarbonat (PC), thermoplastisches Polyurethan (TPU), Polyethylen (PE), Polypropylen (PP). Bevorzugt enthalten die Verbundelemente als Kunststoff (i) thermoplastische Polyolefine (TPO) wie Polyethylen und/oder Polypropylen, Polyvinylchlorid (PVC), Styrolmaleinsäureanhydrid (SMA) und/oder ein Polycarbonat/Styrol-Acrylnitril/Acrylnitril- Butadien Blend (PC/ABS), vorzugsweise in Form von Folien, Platten oder als Litzenmaterial.

Die Kunststoffe (i) können in Form üblicher Materialien zur Herstellung der Verbundelemente eingesetzt werden, beispielsweise als Platten oder Folien, im allgemeinen mit einer Dicke von 0,2 bis 2 mm.

Derartige Folien sind kommerziell erhältlich und ihre Herstellung ist allgemein bekannt. Die Folien weisen bevorzugt eine Dicke von 0,2 bis 2 mm auf. Als (i) können auch mindestens zwei Schichten enthaltene Folien eingesetzt werden, wobei beispielsweise die eine Schicht einen ASA und/oder Polycarbonat-Werkstoff enthält.

Weiter umfassen Kunststoffe (i) alle üblichen Materialien auf Kunststoffbasis, die zur Isolation von elektrischen Leitern üblicherweise eingesetzt werden. Diese umfassen Polyvinylchloride (PVC), thermoplastisches Polyurethan (TPU), Polypropylen (PP) und Ethylentetrafluorethylen (ETFE).

Die Kunststoffe (i) aus Styrolmaleinsäureanhydrid (SMA) und/oder ein Polycarbonat/Styrol-Acrylnitril/Acrylnitril-Butadien Blend (PC/ABS) können in Form üblicher Materialien zur Herstellung der Verbundelemente eingesetzt werden, beispielsweise als Versteifungsteil für Instrumententafeln oder Türseitenteile. Hautmaterialien für selbige Anwendung bestehen häufig aus thermpolastischen Polyolefinen (TPO) und Polyvinylchlorid (PVC).

Erfindungsgemäß schließen sich an den Kunststoff (i) haftend die Polyisocyanat-Polyadditionsprodukte (ii) an. Die Herstellung dieser Polyisocyanat-Polyadditionsprodukte (ii), bevorzugt der Polyurethane, erfolgt erfindungsgemäß durch Vermischen von (a) Isocyanat mit (b) Verbindungen mit gegenüber Isocyanaten reaktiven Gruppen, (c) Katalysatoren, (d) gegebenenfalls Treibmittel und (e) gegebenenfalls weiteren Additiven zu einer Reaktionsmischung und ausreagieren lassen der Reaktionsmischung zum Polyisocyanat-Polyadditionsprodukt, wobei die Verbindungen mit gegenüber Isocyanaten reaktiven Gruppen (b) einen Polyesterpolyalkohol als Haftvermittler enthält, herstellbar durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17 mol-% Phthalsäure, Isophthalsäure und/oder Terephthalsäure aufweist.

Im Rahmen der Erfindung wird die Mischung der Komponenten (a) bis (c) sowie falls vorhanden (d) und (e) bei Reaktionsumsätzen kleiner 90, bevorzugt kleiner 80 %, bezogen auf die Isocyanatgruppen, als Reaktionsmischung bezeichnet.

Das zur Herstellung der erfindungsgemäßen Verbundstoffe verwendete Isocyanat (a) umfasst alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt wird 4,4'-MDI und/oder HDI sowie hoherkernige Homologe des Diphenylmethandiisocyanats (PMDI) verwendet. Das besonders im Mischungen mit PMDI bevorzugt verwendete 4,4'-MDI kann geringe Mengen, bis etwa 10 Gew.%, uretdion-, allophanat- oder uretoniminmodifizierte Polyisocyanate enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Das Isocyanat (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden.

Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole auch die nachfolgend unter (b) beschriebenen Polyole eingesetzt werden.

Gegebenenfalls können der Umsetzung zum Polyisocyanatprepolymer noch Kettenverlängerungsmittel oder Vernetzungsmittel (a-3) zugegeben werden. Als Kettenverlängerungsmittel für das Prepolymer sind zweiwertige, als Vernetzungsmittel dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Propylenoxid, geeignet.

Als Verbindungen mit gegenüber Isocyanaten reaktiven Gruppen können alle Verbindungen eingesetzt werden, die mindestens 2 gegenüber Isocyanat reaktive Wasserstoffatome aufweisen. Beispielsweise können solche Verbindungen mit einer Funktionalität von 2 bis 8 und einem Molekulargewicht von 500 bis 12000, vorzugsweise von 1000 bis 6000 g/mol verwendet werden. So können beispielsweise Polyetherpolyamine, Polycarbonatdiole und/oder Polyetherpolyole, Polyesterpolyalkoholpolyole oder Mischungen daraus, eingesetzt werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterpolyalkoholpolyole werden z.B. hergestellt aus Alkanpolycarbonsäuren, vorzugsweise Alkandicarbonsäuren und einem Überschuss an Alkohol und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Bevorzugt werden als (b) Polyetheralkohole, insbesondere bei der Herstellung von Weich- und Halbhartschäumen, Polyetheralkohole mit einer mittleren Funktionalität von 2 bis 3 und einer OH-Zahl von 20 bis 50 mg KOH/g sowie die erfindungsgemäßen, eingangs dargestellten Polyesterpolyalkoholalkohole als Haftvermittler in den eingangs dargestellten, bevorzugten Mengen eingesetzt. Polyetherole und ihre Herstellung, beispielsweise durch Alkoxylierung üblicher Startsubstanzen, sind allgemein bekannt.

Für Weichintegral- bzw. Kompaktsysteme, wie sie für Kabelummantelungen bzw. Steckerverguss eingesetzt werden, werden vorzugsweise Gemische aus Polyetheralkohole mit einer mittleren Funktionalität von 1,5 bis 2,5 und einer OH-Zahl von 20 bis 50 mg KOH/g mit Polyetheralkohole mit einer mittleren Funktionalität von 2 bis 3 und einer OH-Zahl von 20 bis 50 mg KOH/g, sowie Kettenverlängerern eingesetzt. Es können auch Graft-Polyole verwendet werden.

Des Weiteren können die erfindungsgemäßen Verbindungen (b) in Mischung mit Kettenverlängerungs- und/oder Vernetzungsmitteln als gegenüber Isocyanaten reaktive Verbindungen verwendet werden. Bei den Kettenverlängerungsmitteln handelt es sich üblicherweise um 2-funktionelle Alkohole mit Molekulargewichten von 60 g/mol bis 499 g/mol, beispielsweise Ethylenglykol, Propylenglykol, 1,4-Butandiol, 1,5-Pentandiol. Bei den Vernetzungsmitteln handelt es sich üblicherweise um Verbindungen mit Molekulargewichten von 60 g/mol bis 499 g/mol und 3 oder mehr aktiven H-Atomen, vorzugsweise Aminen und besonders bevorzugt Alkoholen, beispielsweise Glycerin, Trimethylolpropan und/oder Pentaerythrit sowie deren Alkoxylierungsprodukte. Bevorzugt werden Vernetzungsmittel mit einer Funktionalität gegenüber Isocyanaten von 3 und einer OH-Zahl von größer 500 mg KOH/g, bevorzugt größer 900 mg KOH/g, besonders bevorzugt größer 1200 mg KOH/g eingesetzt.

Als Haftvermittler werden Polyesterpolyalkohole eingesetzt, die herstellbar sind durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17, vorzugsweise 4 bis 15 und besonders bevorzugt 8 bis 12 mol-% Phthalsäure, Isophthalsäure und/oder Terephthalsäure aufweist. Vorzugsweise weist die Säurekomponente zur Herstellung des Haftvermittlers neben Adipinsäure und Phthalsäure, Isophthalsäure und/oder Terephthalsäure keine weiteren di- oder höherwertigen Carbonsäuren auf. Vorzugsweise besteht die Säurekomponente aus Adipinsäure und Isophthalsäure. Als niedermolekulares Diol wird vorzugsweise Monoethylenglycol, 1,3-Propandiol, 1,4-Butandiol, 1,5-Pentandiol und/oder 1,6-Hexandiol eingesetzt.

Der Haftvermittler weist vorzugsweise eine Hydroxylzahl von 40 bis 100, vorzugsweise 45 bis 80 und besonders bevorzugt 50 bis 65 mg KOH / g auf. Der Anteil des Haftvermittlers beträgt 0,1 bis 15 Gew.-%, vorzugsweise 0,5 bis 10 Gew.-% und besonders bevorzugt 0,8 bis 5 Gew.-%, bezogen auf das Gesamtgewicht der Verbindung mit gegenüber Isocyanat reaktiven Gruppen (b). Die erfindungsgemäßen Haftvermittler sind leicht zu verarbeiten und weisen bei 75 °C Viskositäten von kleiner 2000 mPas, bevorzugt kleiner 1500 mPas und besonders bevorzugt kleiner 1200 mPas auf.

Als Katalysatoren (c) können übliche Verbindungen eingesetzt werden, die beispielsweise die Reaktion der Komponente (a) mit der Komponente (b) stark beschleunigen. In Frage kommen beispielsweise allgemein für diesen Zweck bekannte tertiäre- Amine und/oder organische Metallverbindungen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethylhexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanol-aminverbindungen, wie Triethanolamin, Triisopropanolamin, N-Methyl- und N-Ethyldiethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Bevorzugt werden als Katalysatoren solche eingesetzt, die zu einem möglichst geringen Fogging (DIN 75201), sowie geringen VOC- und Fog-Werten (VDA 278), d.h. zu einer möglichst geringen Abgabe von flüchtigen Verbindungen aus dem Schaumstoff führen. Bevorzugt setzt man als Katalysatoren (c) Verbindungen ein, die gegenüber Isocyanaten reaktiv sind, d.h. beispielsweise eine freie Hydroxyl- und/oder Aminogruppe aufweisen. Derartige Verbindungen sind allgemein bekannt und vielfältig beschrieben. Beispielsweise kommen Dimethylaminopropylamin, N,N,N-Trimethyl-N-hydroxyethyl-bis(aminoethyl)ether, Aminopropylimidazol und/oder 2-Propanol-bis(3-Dimethylaminopropyl)amin in Frage.

Insbesondere die Herstellung von Halbhartschaumstoffen wird bevorzugt in Abwesenheit von Zinnhaltigen Katalysatoren durchgeführt. Salze von Carbonsäuren, beispielsweise Kaliumacetat, als Katalysatoren (c) werden bevorzugt in einer Menge von kleiner 0,21 Gew.-%, besonders bevorzugt kleiner 0,15 Gew.-%, bezogen auf das Gesamtgewicht der gegenüber Isocyanaten reaktiven Verbindungen (b) eingesetzt.

Als Treibmittel (d) können zur Herstellung der erfindungsgemäßen geschäumten Polyisocyanat-Polyadditionsprodukte allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d.h. solche, inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Als Treibmittel (d) wird für Halbhart Schäume bevorzugt Wasser bevorzugt in einer Menge von 1 Gew.-% bis 5 Gew.-%, besonders bevorzugt 1,5 bis 3 Gew.-%, bezogen auf das Gesamtgewicht der gegenüber Isocyanaten reaktiven Verbindungen (b), eingesetzt. Bei Weichintegralschäumen kommt ebenfalls bevorzugt Wasser bevorzugt in einer Menge von 0 Gew.-% bis 0.8 Gew.-%, besonders bevorzugt 0.07 bis 0.3 Gew.-%, bezogen auf das Gesamtgewicht der gegenüber Isocyanaten reaktiven Verbindungen zum Einsatz. Häufig werden für Weichintegralschäume auch physikalische Treibmittel verwendet. Soll als Polyisocyanat-Polyadditionsprodukt ein kompaktes Produkt hergestellt werden, werden keine Treibmittel eingesetzt.

Die Umsetzung erfolgt gegebenenfalls in Anwesenheit von (e) Zusatzstoffen, wie z.B. Füllstoffen, Fasern, z.B. in Form von Geweben und/oder Matten, Zellreglern, oberflächenaktiven Verbindungen und/oder Stabilisatoren gegen oxidativen, thermischen oder mikrobiellen Abbau oder Alterung. Bevorzugt erfolgt die Herstellung der erfindungsgemäßen Schaumstoffe in Gegenwart allgemein bekannter Emulgatoren, die den erfindungsgemäßen Polyesterpolyalkohol in dem bevorzugten Polyetherol als Komponente (b) phasenstabil halten.

Die Herstellung der erfindungsgemäßen Verbundelemente erfolgt durch in Kontakt bringen der Reaktionsmischung zur Herstellung der Polyisocyanat-Polyadditionsprodukte (ii) mit dem Kunststoff (i) erfolgt üblicherweise ohne die Verwendung weiterer Haftung generierender Materialien, wie Klebstoffe. Vorzugsweise werden Kunststoff (i) und Polyisocyanat-Polyadditionsprodukt (ii) im nicht ausreagierten Zustand miteinander in Kontakt gebracht. Besonders bevorzugt wird zur Herstellung der erfindungsgemäßen Verbundelemente die Reaktionsmischung zur Herstellung der erfindungsgemäßen Verbundelemente mit dem Kunststoff (i) in Kontakt gebracht, beispielsweise in einer Form. Dabei erfolgt die Herstellung der Polyisocyanat-Polyadditionsprodukte, die gegebenenfalls Isocyanurat- und/oder Harnstoffstrukturen enthalten können, beispielsweise der Weichschaumstoffe, Halbhartschaumstoffe oder Integralschaumstoffe, besonders bevorzugt der Halbhartschaumstoffe und Integralschaumstoffe ansonsten nach allgemein bekannten Verfahren, beispielsweise dem one-shot-Verfahren, mit allgemeinen bekannten Werkzeugen, Formen, Mischvorrichtungen und Dosiereinrichtungen.

Zur Herstellung der erfindungsgemäßen Produkte können die Isocyanate (a) und die gegenüber Isocyanaten reaktiven Verbindungen (b) und gegebenenfalls (d) in solchen Mengen zur Umsetzung gebracht, dass das Äquivalenzverhältnis von NCO-Gruppen von (a) zur Summe der reaktiven Wasserstoffatome von (b) und gegebenenfalls (d) bevorzugt 0,3 bis 1,8:1, besonders bevorzugt 0,7 bis 1,3:1 und insbesondere 0,9 bis 1,1:1 beträgt. Die Umsetzung zum Produkt kann beispielsweise durch Handguss, durch Hochdruck- oder Niederdruckmaschinen, wie durch RIM-Verfahren (reactioninjection-molding) in geschlossenen oder bevorzugt offenen Formwerkzeugen durchgeführt werden. Geeignete Verarbeitungsmaschinen sind handelsüblich erhältlich. Die Ausgangskomponenten werden üblicherweise in Abhängigkeit vom Anwendungsfall bei einer Temperatur von 0 bis 100 °C, vorzugsweise von 20 bis 80 °C, gemischt und beispielsweise in das Formwerkzeug eingebracht. Dabei wird der Kunststoff (i) vorzugsweise vor dem Einbringen der Reaktionsmischung in das Formwerkzeug eingelegt. Die Vermischung der Komponenten (a) bis (e) kann, wie bereits dargelegt wurde, mechanisch mittels eines Rührers oder einer Rührschnecke durchgeführt werden, oder kann in einem üblichen Hochdruckmischkopf erfolgen. Die Umsetzung des Reaktionsgemisches kann beispielsweise in üblichen, bevorzugt temperierbaren und verschließbaren Formen durchgeführt werden. Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxydharz oder einem anderen polymeren Werkstoff besteht, wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und bevorzugt zur Ausübung eines Druckes auf das Produkt ausgerüstet sein. Die Umsetzung zu den Polyurethanschaumstoffen erfolgt üblicherweise bei einer Formtemperatur, bevorzugt auch einer Temperatur der Ausgangskomponenten, von 20 bis 220 °C, bevorzugt 25 bis 120 °C, besonders bevorzugt 30 bis 80 °C, für eine Dauer von üblicherweise 0,5 bis 30 min, bevorzugt 1 bis 5 min. Als vorteilhaft hat es sich erwiesen, die Polyurethanschaumstoffe nach dem Zweikomponentenverfahren herzustellen und die gegenüber Isocyanaten reaktiven Verbindungen (b) und gegebenenfalls die Katalysatoren (c), gegebenenfalls Treibmittel (d) und/oder Zusatzstoffe (e) in der A-Komponente zu vereinigen und als B-Komponente die Isocyanate (a) und gegebenenfalls Katalysatoren und/oder Treibmittel einzusetzen.

Die erfindungsgemäßen Verbundelemente weisen durch die Verwendung der eingangs beschriebenen Polyesterpolyalkoholpolyole insbesondere eine deutlich verbesserte Haftung zwischen Kunststoff (i) und Polyisocyanat-Polyadditionsprodukt (ii) auf. Diese Haftung kann auf unterschiedliche Weise bestimmt werden, beispielsweise durch Messen der Kraft, die zum Ablösen des Kunststoffs benötigt wird. Bei flächigen Haftverbunden wird vorzugsweise eine Abschälkraft zwischen (i) und (ii) bei Messung gemäß DIN 53289 oder 53530 im Neuzustand sowie nach Wärme- und Feuchtwärmelagerung von 2,5 N/cm oder mehr erreicht. Ferner kann die Haftung nach subjektiven Beurteilungskriterien bestimmt werden. Beim Kabelumguß und bei Tüllen ist die Längswasserdichtigkeit nur gegeben, wenn Haftung zwischen (i) und (ii) besteht. Diese wird z.B. nach interner Spezifikation von DELPHI (REI-WDP 1), interner Spezifikation von Ford (WSS-M15P45-A: FLTM-BI 104-01) oder nach Norm von PSA-Peugeot-Citroen (B21 7050) geprüft. Dabei wird eine Wassersäule auf eine Seite der Tülle gestellt; sollte Feuchtigkeit auf der anderen Seite der Tülle messbar sein, ist die Probe nicht in Ordnung (n.i.O.). Des Weiteren werden für die Dichtigkeit von Kabelummantelungen teilweise Tests mit erhöhtem Luftdruck durchgeführt und der Druckabfall gemessen.

Die erfindungsgemäßen Verbundelemente werden bevorzugt als Bauteile im Fahrzeug-, Flugzeug- oder Immobilienbau eingesetzt, beispielsweise als Armaturenbretter, Türverkleidungen, Hutablagen, Konsolen, Armauflagen oder Türspiegel. Weiter werden die erfindungsgemäßen Verbundelemente bei der Ummantelung elektrischer Leiter eingesetzt. Hier ist neben der Herstellung formstabiler umschäumter Kabelsätze auch die Herstellung von Tüllen, der Stecker- sowie der Relaisverguss zu nennen. Dabei liegt das Polyisocyanat-Polyadditionsprodukt bei Produkten im Fahrzeug-, Flugzeug- oder Immobilienbau sowie bei der Isolierung elektrischer Leiter vorzugsweise geschäumt vor. Handelt es sich um Stecker- und Relaisverguss liegt das Polyisocyanat-Polyadditionsprodukt vorzugsweise kompakt vor.

Durch den Einsatz der erfindungsgemäßen Polyesterpolyalkohole wird erfindungsgemäß erreicht, dass ein Ausflocken oder Auskristallisieren der Polyesterpolyalkohole aus einer Mischung mit gegenüber Isocyanaten reaktiven Verbindungen (b) erfolgreich vermieden werden kann. Findet das Auskristallisieren statt, so soll sich der Niederschlag bei Wiedererwärmung auf Raumtemperatur auflösen. Ferner wird die Viskosität der Mischung bei tiefen Temperaturen gegenüber Mischungen mit herkömmlichen Polyesterpolyalkoholen deutlich herabgesetzt, wodurch deren Verarbeitung erleichtert wird.

Im Folgenden wird die Erfindung anhand von Beispielen verdeutlicht.

Eine Auswahl der Polyesterpolyole, die für die erfindungsgemäße Aufgabe hergestellt wurden und auf Temperaturverhalten, auf Haftung sowie gegebenenfalls in der Polyolkomponente auf Stabilität getestet wurden ist in nachfolgender Tabelle dargestellt.

| | Polyester 1 | Polyester 2 | Referenz-Polyester 3 | Referenz-Polyester 4 | Polyester 5 | Polyester 6 |
|---|---|---|---|---|---|---|
| Adipinsäure | 0,45 mol% | 0,45 mol% | 0,45 mol% | 0,40 mol% | 0,45 mol% | 0,45 mol% |
| Phthalsäure | 0,05 mol% | | | | 0,05 mol% | |
| Isophthalsäure | | 0,05 mol% | | | | 0,05 mol% |
| Bernsteinsäure | | | 0,05 mol% | 0,1 mol% | | |
| Monoethyl-englykol | 0,23 mol% | 0,23 mol% | 0,24 mol% | 0,24 mol% | | |
| 1,4-Butandiol | 0,27 mol% | 0,27 mol% | 0,26 mol% | 0,26 mol% | 0,11 mol% | 0,11 mol% |
| 1,5-Pentandiol | | | | | 0,25 mol% | 0,25 mol% |
| 1,6-Hexandiol | | | | | 0,14 mol% | 0,14 mol% |

Als Vergleich wurden Produkte hergestellt, die nur auf Basis von Adipinsäure sind, sowie deren Ester mit Propandiol:

| | Referenz-Polyester 7 | Referenz-Polyester 8 |
|---|---|---|
| Adipinsäure | 0,5 mol% | 0,5 mol% |
| Monoethylenglykol | 0,25 mol% | |
| 1,3-Propandiol | | |
| 1,4-Butandiol | 0,25 mol% | 0,12 mol% |
| 1,5-Pentandiol | | 0,26 mol% |
| 1,6-Hexandiol | | 0,12 mol% |

Die oben genannten Ester haben alle eine Funktionalität von 2 sowie OH-Zahlen zwischen 50 und 65 mg KOH/g. Zunächst wurden die Stock- bzw. Kristallisationstemperaturen der Reinsubstanzen bei Abkühlraten von 1 °C/ Tag bestimmt:

| | OH-Zahlen [in mg KOH/g] | Stock- bzw. Kristallisationstemperatur |
|---|---|---|
| Polyester 1 | 56,6 | 10 °C |
| Polyester 2 | 53,2 | 8 °C |
| Referenz-Polyester 3 | 61,8 | 13 °C |
| Referenz-Polyester 4 | 58,7 | 9 °C |
| Polyester 5 | 55,2 | 8 °C |
| Polyester 6 | 55,8 | 9 °C |
| Referenz-Polyester 7 | 55,0 | >25 °C |
| Referenz-Polyester 8 | 56,0 | 17 °C |

Sowohl die Polyester mit 10 mol% Phthalsäure und Isophthalsäure bezogen auf die Säurekomponente zeigen einen deutlich verringerten Stock- bzw. Kristallisationspunkt. Bei Einsatz von 10 mol% Bernsteinsäure reduziert sich der Stock- bzw. Kristallisationspunkt nur leicht, eine stärkere Erniedrigung wird erst bei Zugabe größeren Mengen Bernsteinsäure erhalten.

Es wurde die Haftung zu PC/ABS-Platten untersucht. Dazu wurde 2 verschiedene Plattenqualitäten benutzt:

| |
|---|
| Platte 1: Glasfaserverstärktes PC/ABS |
| Platte 2: PC/ABS ohne Glasfaserverstärkung |

Die Haftung wurde mit einer subjektiven Testmethode beurteilt. Dabei wurden das Polyurethan von den PC/ABS-Platten abgezogen und die Haftung anhand einer Bewertungsskala von 1 bis 5 bewertet. Dabei bedeutet:
5 Adhesiver Bruch, keine Haftung
4 Kohesiver Bruch; Haut kann von der PC/ABS Platte leicht entfernt werden
3 Kohesiver Bruch; Haut kann von der PC/ABS Platte entfernt werden
2 Kohesiver Bruch; Haut kann von der PC/ABS Platte schwer entfernt werden
1 Kohesiver Bruch; Haut kann von der PC/ABS Platte nicht entfernt werden

Für eine Bewertung von 1-4 ist die Haftkraft in der Regel für Automobilanwendungen ausreichend.
Die Haftung wird dabei nach 10 Minuten, 1 Stunde und 24 Stunden nach der Herstellung sowie nach Feuchtwärmealterung (80°C, 80 Stunden, 80% relative Feuchte) bewertet.

Im Folgenden werden verschiedene Systeme untersucht. Dabei wurden folgende Ausgangstoffe eingesetzt:

| | |
|---|---|
| Polyol A: | Polyetherpolyol mit OH-Zahl 28 mg KOH/g, PO/EO Gewichtsverhältnis 86:14, mittlere Funktionalität 2.7 |
| Polyol B: | Polyetherpolyol mit OH-Zahl 36 mg KOH/g, PO/EO Gewichtsverhältnis 87:13, mittlere Funktionalität 2.6 |
| Polyol C: | Polyetherpolyol mit OH-Zahl 250 mg KOH/g, nur PO, mittlere Funktionalität 2.0 |
| Polyol D: | Polyetherpolyol mit OH-Zahl 30 mg KOH/g, PO/EO Gewichtsverhältnis 94:6, mittlere Funktionalität 2.2 |
| Polyol E: | Polyetherpolyol mit OH-Zahl 535 mg KOH/g, nur EO, mittlere Funktionalität 3.0 |
| Polyol F: | Polyetherpolyol mit OH-Zahl 35 mg KOH/g, PO/EO Gewichtsverhältnis 86:14, mittlere Funktionalität 2.7 |
| Polyol G: | Polyetherpolyol mit OH-Zahl 26 mg KOH/g, PO/EO Gewichtsverhältnis 79:21, mittlere Funktionalität 2.5 |
| Polyol H: | Polyetherpolyol mit OH-Zahl 555 mg KOH/g, nur PO, mittlere Funktionalität 3.0 |
| Polyol I: | Polyetherpolyol mit OH-Zahl 29 mg KOH/g, PO/EO Gewichtsverhältnis 81:19, mittlere Funktionalität 1.8 |
| PP 50: | Perstop Polyol mit OH-Zahl 630 und Funktionalität 4 |
| Jeffcat ZR50: | gegenüber Isocanat reaktiver Amin-Katalysator der Firma Huntsman |
| Jeffcat ZF10: | gegenüber Isocanat reaktiver Amin-Katalysator der Firma Huntsman |
| Polycat 15: | gegenüber Isocanat reaktiver Amin-Katalysator der Firma AirProducts |
| Isocyanat A: | Basis MDI mit Funktionalität 2.1 und NCO-Gehalt 26 |
| Isocyanat B: | Basis MDI mit Funktionalität 2.1 und NCO-Gehalt 25 |
| PMDI: | Polymer-MDI mit einer mittleren Funktionalität 2.7 und NCO-Gehalt 31.2 |

Die Rezepturen der System 1 und 2 sind in nachstehender Tabelle zusammengefasst. Dabei beziehen sich die Mengenangaben auf Gewichtsteile:

| | System 1 | System 2 |
|---|---|---|
| Polyol-Komponente | | |
| Polyol A | 86,0 | 70,5 |
| Polyol B | | 22,0 |
| Polyol C | | 1,0 |
| Polyester | 3,0 | 2,5 |
| Triethanolamin | | 1,5 |
| PP 50 | 7,5 | |
| Wasser | 2,6 | 1,2 |
| Jeffcat ZR-50 | 0,9 | 0,8 |
| Emulgator | | 0,5 |
| | | |
| Iso-Komponente | | |
| Isocyanat A | 70 | 85 |
| PMDI | 30 | 15 |
| | | |
| MV 100: | 64 | 37 |
| Raumgewicht frei [kg/m³] | 52 | 94 |
| Dichte Formteil [kg/m³] | 100 | 155 |

Dabei bedeutet MV 100 Mischungsverhältnis Gewichtsteile Isocyanatkomponente zu 100 Teilen Polyolkomponente

Die Ergebnisse der Haftungstest sind in nachfolgenden zwei Tabellen dargestellt:

| Charge PC/ABS-Platte | System | Muster | Nach 10 min. | Nach 1 h | Nach 24 h | Nach FW-Alterung | Summe |
|---|---|---|---|---|---|---|---|
| Platte 1 | System 1 | Ohne Polyester | 4 | 3 | 3 | 5 | 15 |
| Platte 2 | | | 3 | 3 | 2 | 4 | 12 |
| | | | | | | | |
| Platte 1 | System 1 | Polyester 1 | 1 | 1 | 1 | 3 | 6 |
| Platte 2 | | | 1 | 1 | 1 | 3 | 6 |
| | | | | | | | |
| Platte 1 | System 1 | Polyester 2 | 2 | 1 | 1 | 2 | 6 |
| Platte 2 | | | 1 | 1 | 1 | 2 | 5 |
| | | | | | | | |
| Platte 1 | System 1 | Ref-Polyester 3 | 1 | 1 | 1 | 3 | 6 |
| Platte 2 | | | 1 | 1 | 1 | 2 | 5 |
| | | | | | | | |
| Platte 1 | System 1 | Ref-Polyester 4 | 3 | 2 | 3 | 4 | 12 |
| Platte 2 | | | 2 | 2 | 2 | 4 | 10 |
| | | | | | | | |
| Platte 1 | System 1 | Polyester 5 | 2 | 1 | 1 | 3 | 7 |
| Platte 2 | | | 2 | 1 | 1 | 3 | 7 |
| | | | | | | | |
| Platte 1 | System 1 | Polyester 6 | 2 | 1 | 1 | 3 | 7 |
| Platte 2 | | | 1 | 1 | 1 | 3 | 6 |
| | | | | | | | |
| Platte 1 | System 1 | Ref-Polyester 7 | 2 | 1 | 1 | 3 | 7 |
| Platte 2 | | | 2 | 2 | 1 | 3 | 8 |
| | | | | | | | |
| Platte 1 | System 1 | Ref-Polyester 8 | 3 | 2 | 3 | 3 | 11 |
| Platte 2 | | | 1 | 1 | 3 | 3 | 8 |
| Platte 1 | System 2 | Ohne Polyester | 4 | 4 | 4 | 5 | 17 |
| Platte 2 | | | 4 | 4 | 4 | 4 | 16 |
| | | | | | | | |
| Platte 1 | System 2 | Polyester 1 | 2 | 2 | 2 | 5 | 11 |
| Platte 2 | | | 1 | 1 | 1 | 5 | 8 |
| | | | | | | | |
| Platte 1 | System 2 | Polyester 2 | 2 | 2 | 2 | 5 | 11 |
| Platte 2 | | | 2 | 2 | 2 | 4 | 10 |
| | | | | | | | |
| Platte 1 | System 2 | Ref-Polyester 3 | 2 | 2 | 2 | 5 | 11 |
| Platte 2 | | | 2 | 2 | 1 | 5 | 10 |
| | | | | | | | |
| Platte 1 | System 2 | Ref-Polyester 4 | 3 | 3 | 3 | 5 | 14 |
| Platte 2 | | | 3 | 3 | 2 | 5 | 13 |
| | | | | | | | |
| Platte 1 | System 2 | Polyester 5 | 2 | 2 | 1 | 5 | 10 |
| Platte 2 | | | 1 | 1 | 1 | 5 | 8 |
| | | | | | | | |
| Platte 1 | System 2 | Polyester 6 | 2 | 1 | 1 | 5 | 9 |
| Platte 2 | | | 2 | 1 | 1 | 4 | 8 |
| | | | | | | | |
| Platte 1 | System 2 | Ref.-Polyester 7 | 2 | 2 | 2 | 5 | 11 |
| Platte 2 | | | 2 | 2 | 3 | 5 | 12 |
| | | | | | | | |
| Platte 1 | System 2 | Ref.-Polyester 8 | 1 | 1 | 2 | 5 | 9 |
| Platte 2 | | | 2 | 2 | 1 | 4 | 9 |

Anhand der Beispiele ist ersichtlich, dass die Haftung mit den Polyesterpolyole mit 10% Phthalsäure und Isophthalsäure bezogen auf die Säurekomponente sowie die Haftung mit den Polyesterolen mit 1,3-Propandiol als Diol mindestens im gleichen Rahmen oder besser als die Haftung mit den Referenzpolyolen liegt. Ester, mit 10% Bernsteinsäure bezogen auf die A-Komponente zeigen zwar gleich gute Haftung; da aber die gewünschte Temperaturstabilität erst bei größeren Mengen (20% bezogen auf die Säurekomponente) erreicht wird und die Haftung bei Einsatz so großer Mengen deutlich verschlechtert ist, kommt ein Einsatz von Bernsteinsäure nicht in Betracht. Außerdem zeigt sich das größere Mengen einer anderen Säure als Adipinsäure die Haftung verringern.

Die Eintrübung der Polyolkomponente wurde am Beispiel folgender Systeme untersucht. Dabei beziehen sich die Mengenangaben auf Gewichtsteile:

| | System 3 | System 4 |
|---|---|---|
| Polyol-Komponente | | |
| Polyol A | 77,3 | |
| Polyol B | | 45,5 |
| Polyol C | 1,5 | 2,0 |
| Polyol D | | 36,5 |
| Polyol E | | 4,0 |
| Polyol F | 0,3 | 2,7 |
| Polyol G | 10,0 | |
| Polyol H | 3,0 | |
| Polyester | 3,0 | 3,0 |
| Triethanolamin | 2,0 | 1,5 |
| Rizinolsäure | | 1,6 |
| Wasser | 1,8 | 2,2 |
| Kaliumacetat 25% in EG | 0,6 | |
| Jeffcat ZF-10 | 0,2 | |
| Polycat 15 | | 0,5 |
| Emulgator | 0,3 | 0,5 |

Die verschiedenen Polyester wurden in den Systemen 3 und 4 eingesetzt und im Scheidetrichter bei einer Abkühlrate von 1°C/ Tag gekühlt. Folgende Beobachtungen konnten festgestellt werden:

| | System 3 | |
|---|---|---|
| | Eintrübung des Systems bei | Trübung verschwindet bei Wiederaufheizen auf RT |
| Polyester 1 | 7°C | ja |
| Polyester 2 | 9°C | ja |
| Referenz Polyester 3 | 13 °C | nein |
| Referenz Polyester 4 | 6 °C | ja |
| Polyester 5 | 9 °C | ja |
| Polyester 6 | 8 °C | ja |
| Referenz Polyester 7 | 20 °C | nein |
| Referenz-Polyester 8 | 14 °C | nein |
| Polyester 9 | 5 °C | ja |
| Polyester 10 | 4 °C | ja |
| Polyester 11 | 11 °C | nein |

| | System 4 | |
|---|---|---|
| | Eintrübung des Systems bei | Trübung verschwindet bei Wiederaufheizen auf RT |
| Polyester 1 | 9 °C | ja |
| Polyester 2 | 6°C | ja |
| Referenz Polyester 3 | 14 °C | nein |
| Referenz Polyester 4 | 8 °C | ja |
| Polyester 5 | 8 °C | ja |
| Polyester 6 | 8 °C | ja |
| Referenz Polyester 7 | 20 °C | nein |
| Referenz-Polyester 8 | 17 °C | nein |

Die Längswasserdichtigkeit wurde am folgendem System überprüft. Dabei beziehen sich die Mengenangaben auf Gewichtsteile:

| | System 5 |
|---|---|
| Polyol-Komponente | |
| Polyol F | 40,8 |
| Polyol G | 20,0 |
| Polyol I | 30,0 |
| Polyester | 1,0 |
| 1,4-Butandiol | 7,0 |
| Wasser | 0,1 |
| Bis-(2-dimethylaminioethyl)ether | 0,1 |
| 1,4-Diaza-bicyclo-(2,2,2)-octan | 1,0 |
| | |
| | |
| Iso-Komponente | |
| Isocyanat B | 100 |
| | |
| | |
| M V 100: | 41 |

Dazu wurden als Polyester die Polyester 1, 2, 5, 6 und der Referenzpolyester 8 eingesetzt. Bei den Polyestern 1, 2, 5 und 6 wurde der Test bestanden. Mit Polyester 8 wurde der Test nicht bestanden, da Feuchtigkeit auf der anderen Seite der Wassersäule festgestellt werden konnte.

## Patentansprüche

1. Verbundelemente, enthaltend
(i) Kunststoff, an den sich haftend
(ii) ein Polyisocyanat-Polyadditionsprodukt anschließt, wobei das Polyisocyanat-Polyadditionsprodukt erhalten wird durch Vermischen von
a) Isocyanat mit
b) Verbindungen mit gegenüber Isocyanaten reaktiven Gruppen,
c) Katalysatoren,
d) gegebenenfalls Treibmittel und
e) gegebenenfalls weiteren Additiven,
zu einer Reaktionsmischung und ausreagieren lassen der Reaktionsmischung zum Polyisocyanat-Polyadditionsprodukt, wobei die Verbindungen mit gegenüber Isocyanaten reaktiven Gruppen (b) einen Polyesterpolyalkohol als Haftvermittler enthält, herstellbar durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17 mol-% Phthalsäure, Isophthalsäure und/oder Terephthalsäure aufweist.

2. Verbundelement nach Anspruch 1, **dadurch gekennzeichnet, dass** die Säurekomponente neben Adipinsäure und Phthalsäure, Isophthalsäure und/oder Terephthalsäure keine weiteren di- oder höherwertigen Carbonsäuren enthält.

3. Verbundelement nach Anspruch 1 oder 2, **dadurch gekennzeichnet, dass** die Säurekomponente aus Adipinsäure und Isophthalsäure besteht.

4. Verbundelement nach einem der Ansprüche 1 bis 3, **dadurch gekennzeichnet, dass** das niedermolekulare Diol Monoethylenglycol, 1,3-Propandiol, 1,4-Butandiol, 1,5-Pentandiol oder 1,6-Hexandiol ist.

5. Verbundelement nach einem der Ansprüche 1 bis 4, **dadurch gekennzeichnet, dass** der Haftvermittler eine Hydroxylzahl von 40 bis 100 aufweist.

6. Verbundelement nach einem der Ansprüche 1 bis 5, **dadurch gekennzeichnet, dass** der Anteil des Haftvermittlers 0,5 bis 10 Gew.-%, bezogen auf das Gesamtgewicht der Verbindung mit gegenüber Isocyanat reaktiven Gruppen (b) beträgt.

7. Verbundelement nach einem der Ansprüche 1 bis 6, **dadurch gekennzeichnet, dass** das Polyisocyanat-Polyadditionsprodukt (ii) ein kompaktes Polyurethan, ein Polyurethanweichschaumstoff, ein Polyurethanhalbhartschaumstoff oder ein Integralschaumstoff ist.

8. Verbundelement nach einem der Ansprüche 1 bis 7, **dadurch gekennzeichnet, dass** der Kunststoff (i) ein thermoplastischer Kunststoff ist.

9. Verbundelement nach einem der Ansprüche 1 bis 8, **dadurch gekennzeichnet, dass** der Kunststoff (i) die Isolierung für einen elektrischen Leiter ist.

10. Verfahren zur Herstellung von Verbundelementen, enthaltend
(i) Kunststoff, an den sich haftend
(ii) ein Polyisocyanat-Polyadditionsprodukt anschließt, wobei man
a) Isocyanat mit
b) Verbindungen mit gegenüber Isocyanaten reaktiven Gruppen,
c) Katalysatoren,
d) gegebenenfalls Treibmittel und
e) gegebenenfalls weiteren Additiven
zu einer Reaktionsmischung vermischt und die Reaktionsmischung zum Polyisocyanat-Polyadditionsprodukt ausreagieren lässt, wobei die Verbindungen mit gegenüber Isocyanaten reaktiven Gruppen (b) einen Polyesterpolyalkohol als Haftvermittler enthalten, herstellbar durch Polykondensation von einer Säurekomponente und einem oder mehreren niedermolekularen Diolen mit einem Molekulargewicht von weniger als 500 g/mol im Überschuss, wobei die Säurekomponente 83 bis 97 mol-% Adipinsäure und 3 bis 17 mol-% Phthalsäure, Isophthalsäure und/oder Terephthalsäure aufweist.

11. Bauteil im Flugzeug-, Fahrzeug- oder Immobilienausbau, enthaltend ein Verbundelement gemäß einem der Ansprüche 1 bis 10.

12. Bauteil nach Anspruch 11, **dadurch gekennzeichnet, dass** es eine Ummantelung eines elektrischen Leiters ist.

## Claims

1. A composite element comprising
(i) plastic, adhering to which there is
(ii) a polyisocyanate polyaddition product, where the polyisocyanate polyaddition product is obtained via mixing of
a) isocyanate with
b) compounds having groups reactive toward isocyanates,
c) catalysts,
d) if appropriate, blowing agent, and
e) if appropriate, further additives,
to give a reaction mixture and permitting the reaction mixture to complete its reaction to give the polyisocyanate polyaddition product, where the compounds (b) having groups reactive toward isocyanates comprise a polyester polyalcohol as adhesion promoter, capable of production via polycondensation of an acid component and of one or more low-molecularweight diols whose molar mass is less than 500 g/mol, in excess, where the acid component comprises from 83 to 97 mol% of adipic acid and from 3 to 17 mol% of phthalic acid, isophthalic acid, and/or terephthalic acid.

2. The composite element according to claim 1, wherein the acid component comprises no further di- or polybasic carboxylic acids other than adipic acid and phthalic acid, isophthalic acid, and/or terephthalic acid.

3. The composite element according to claim 1 or 2, wherein the acid component is composed of adipic acid and isophthalic acid.

4. The composite element according to any of claims 1 to 3, wherein the low-molecular-weight diol is monoethylene glycol, 1,3-propanediol, 1,4-butanediol, 1,5-pentanediol, or 1,6-hexanediol.

5. The composite element according to any of claims 1 to 4, wherein the hydroxy number of the adhesion promoter is from 40 to 100.

6. The composite element according to any of claims 1 to 5, wherein the proportion of the adhesion promoter is from 0.5 to 10% by weight, based on the total weight of the compound (b) having groups reactive toward isocyanate.

7. The composite element according to any of claims 1 to 6, wherein the polyisocyanate polyaddition product (ii) is a compact polyurethane, a flexible polyurethane foam, a semirigid polyurethane foam, or an integral foam.

8. The composite element according to any of claims 1 to 7, wherein the plastic (i) is a thermoplastic.

9. The composite element according to any of claims 1 to 8, wherein the plastic (i) is the insulation for an electrical conductor.

10. A process for producing composite elements comprising
(i) plastic, adhering to which there is
(ii) a polyisocyanate polyaddition product, where
a) isocyanate with
b) compounds having groups reactive toward isocyanates,
c) catalysts,
d) if appropriate, blowing agent, and
e) if appropriate, further additives,
is mixed to give a reaction mixture and the reaction mixture is permitted to complete its reaction to give the polyisocyanate polyaddition product, where the compounds (b) having groups reactive toward isocyanates comprise a polyester polyalcohol as adhesion promoter, capable of production via polycondensation of an acid component and of one or more low-molecular-weight diols whose molar mass is less than 500 g/mol, in excess, where the acid component has 83 to 97 mol% of adipic acid and 3 to 17 mol% of phthalic acid, isophthalic acid and/or terethphalic acid.

11. A component in the fitting-out of aircraft, of vehicles, or of buildings, comprising a composite element according to any of claims 1 to 10.

12. The component according to claim 11, which is sheathing of an electrical conductor.

## Revendications

1. Éléments composites, contenant
(i) un plastique, auquel adhère
(ii) un produit de polyaddition de polyisocyanate, le produit de polyaddition de polyisocyanate étant obtenu par mélange de
a) un isocyanate avec
b) des composés contenant des groupes réactifs avec les isocyanates,
c) des catalyseurs,
d) éventuellement des agents gonflants et
e) éventuellement des additifs supplémentaires,
en un mélange réactionnel et mise en réaction du mélange réactionnel pour obtenir le produit de polyaddition de polyisocyanate, les composés contenant des groupes réactifs avec les isocyanates (b) contenant un polyester-polyol en tant que promoteur d'adhésion, pouvant être fabriqué par polycondensation d'un composant acide et d'un ou de plusieurs diols inférieurs ayant un poids moléculaire inférieur à 500 g/mol en excès, le composant acide comprenant 83 à 97 % en moles d'acide adipique et 3 à 17 % en moles d'acide phtalique, d'acide isophtalique et/ou d'acide téréphtalique.

2. Élément composite selon la revendication 1, **caractérisé en ce que** le composant acide ne contient pas d'acides carboxyliques bivalents ou de valence supérieure supplémentaires en plus de l'acide adipique et de l'acide phtalique, de l'acide isophtalique et/ou de l'acide téréphtalique.

3. Élément composite selon la revendication 1 ou 2, **caractérisé en ce que** le composant acide est constitué d'acide adipique et d'acide isophtalique.

4. Élément composite selon l'une quelconque des revendications 1 à 3, **caractérisé en ce que** le diol inférieur est le monoéthylène glycol, le 1,3-propanediol, le 1,4-butanediol, le 1,5-pentanediol ou le 1,6-hexanediol.

5. Élément composite selon l'une quelconque des revendications 1 à 4, **caractérisé en ce que** le promoteur d'adhésion présente un indice hydroxyle de 40 à 100.

6. Élément composite selon l'une quelconque des revendications 1 à 5, **caractérisé en ce que** la proportion de promoteur d'adhésion est de 0,5 à 10 % en poids, par rapport au poids total du composé contenant des groupes réactifs avec les isocyanates (b).

7. Élément composite selon l'une quelconque des revendications 1 à 6, **caractérisé en ce que** le produit de polyaddition de polyisocyanate (ii) est un polyuréthane compact, une mousse souple de polyuréthane, une mousse semi-dure de polyuréthane ou une mousse intégrale.

8. Élément composite selon l'une quelconque des revendications 1 à 7, **caractérisé en ce que** le plastique (i) est un plastique thermoplastique.

9. Élément composite selon l'une quelconque des revendications 1 à 8, **caractérisé en ce que** le plastique (i) est l'isolation pour un conducteur électrique.

10. Procédé de fabrication d'éléments composites, contenant
(i) un plastique, auquel adhère
(ii) un produit de polyaddition de polyisocyanate, selon lequel
a) un isocyanate est mélangé avec
b) des composés contenant des groupes réactifs avec les isocyanates,
c) des catalyseurs,
d) éventuellement des agents gonflants et
e) éventuellement des additifs supplémentaires,
en un mélange réactionnel et le mélange réactionnel est mis en réaction pour obtenir le produit de polyaddition de polyisocyanate, les composés contenant des groupes réactifs avec les isocyanates (b) contenant un polyester-polyol en tant que promoteur d'adhésion, pouvant être fabriqué par polycondensation d'un composant acide et d'un ou de plusieurs diols inférieurs ayant un poids moléculaire inférieur à 500 g/mol en excès, le composant acide comprenant 83 à 97 % en moles d'acide adipique et 3 à 17 % en moles d'acide phtalique, d'acide isophtalique et/ou d'acide téréphtalique.

11. Composant dans la construction d'avions, d'automobiles ou de biens immobiliers, contenant un élément composite selon l'une quelconque des revendications 1 à 10.

12. Composant selon la revendication 11, **caractérisé en ce qu'**il s'agit d'un enrobage d'un conducteur électrique.
